Europäisches Patentamt

European Patent Office

Office européen des brevets

(11) Veröffentlichungsnummer: **0 472 191 A2**

(12) **EUROPÄISCHE PATENTANMELDUNG**

(21) Anmeldenummer: **91114025.9**

(22) Anmeldetag: **21.08.91**

(51) Int. Cl.⁵: **C04B 35/00**

(30) Priorität: **21.08.90 US 570375**

(43) Veröffentlichungstag der Anmeldung:
**26.02.92 Patentblatt 92/09**

(84) Benannte Vertragsstaaten:
**AT BE CH DE DK ES FR GB GR IT LI LU NL**

(71) Anmelder: **VEREINIGTE ALUMINIUM-WERKE AKTIENGESELLSCHAFT**
**Georg-von-Boeselager-Strasse 25**
**W-5300 Bonn 1(DE)**

(72) Erfinder: **Schindler, Stefan, Dr.**
**Virnebergstrasse 32**
**W-5342 Rheinbreitbach(DE)**
Erfinder: **Schultze, Werner, Dr.**
**Brüsseler Strasse 60 a**
**W-5300 Bonn 1(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Keramisches Formteil und Verfahren zu seiner Herstellung.**

㊗ Keramisches Formteil, das aus mindestens einer Schicht eines keramischen Werkstoffs aufgebaut ist und das gegen Rißbildung durch Wärmespannungen aufgrund steiler Temperaturgradienten beständig ist. Das keramische Formteil weist mindestens einen Schlitz auf, der in Richtung veränderlicher Wärmedehnung verläuft, und die Schlitzbreite ist so bemessen, daß die maximal auftretende Wärmedehnung des keramischen Formteils in der Schlitzbreite aufgefangen wird. Es wird ein Verfahren zur Herstellung des keramischen Formteils zur Verfügung gestellt, wobei der keramische Werkstoff in mindestens fünf Schichten durch Plasmaspritzen auf einen Formkern oder eine Formplatte aufgetragen wird, während der Abkühlung an dem Formkern oder der Formplatte mittels Dehnungsmeßstreifen der Spannungsverlauf festgestellt und nach Trennung des keramischen Werkstoffs vom Formkern bzw. der Formplatte in mindestens eine Schicht mindestens ein Schlitz in Richtung des Spannungsverlaufs eingebracht wird.

EP 0 472 191 A2

Die vorliegende Erfindung betrifft ein keramisches Formteil, das aus mindestens einer Schicht eines keramischen Werkstoffes aufgebaut ist und das gegen Rißbildung durch Wärmespannungen aufgrund steiler Temperaturgradienten beständig ist, sowie ein Verfahren zu dessen Herstellung.

Es ist bekannt, in Öfen, Brennern und anderen Hochtemperaturaggregaten Formteile aus keramischen Werkstoffen einzusetzen, deren maximale Temperaturbelastbarkeit bis zu 2000 °C reichen kann.

Beim Einsatz derartiger Formteile in Zonen mit steilen Temperaturgradienten treten über die Länge des Formkörpers erhebliche Spannungen durch ungleichmäßige Wärmeausdehnung auf, die häufig zur Rißbildung und anschließendem Bruch des Formkörpers führen. Insbesondere bei keramischen Formkörpern großer Abmessungen, wie z. B. bei Drehrohren, können deshalb schroffe Temperaturübergänge häufig nicht realisiert werden. Dieses Problem besteht auch dann, wenn die Temperaturdifferenzen über eine geringe Länge des Formkörpers extrem hoch sind.

Aufgabe der vorliegenden Erfindung ist es daher, ein keramisches Formteil zu entwickeln, das auch großen Temperaturschwankungen, insbesondere bei schroffen Temperaturübergängen ohne Rißbildung standhält. Es ist eine weitere Aufgabe der Erfindung, ein Verfahren zur Herstellung eines solchen Formteils anzubieten.

Die Aufgabe wird durch die in den Patentansprüchen angegebenen Merkmale gelöst.

Erfindungsgemäß ist das keramische Formteil aus mindestens einer Schicht eines keramischen Werkstoffes aufgebaut und weist mindestens einen Schlitz auf, der in Richtung veränderlicher Wärmedehnung des Formkörpers verläuft. Die Schlitzbreite ist so bemessen, daß die maximale Wärmedehnung von der Schlitzbreite aufgefangen werden kann. Es hat sich gezeigt, daß die erfindungsgemäßen Formteile bei geeigneter Anbringung der Schlitze derart temperaturschockunempfindlich sind, daß selbst Temperaturunterschiede von 1000 °C auf 5 cm Länge nicht zu einer Rißbildung bzw. zum Ausfall des Formteils führen.

Nach dem erfindungsgemäßen Verfahren zur Herstellung eines solchen keramischen Formteils mit schichtartigen Aufbau des keramischen Werkstoffs, werden einzelne Schichten des keramischen Werkstoffs auf einen Formkern oder eine Formplatte aufgebracht. Der Spannungsverlauf wird mittels Dehnungsmeßstreifen während der Abkühlung an dem Formkern oder der Formplatte festgestellt. Nach Trennung des keramischen Werkstoffs vom Formkern oder der Formplatte werden in Richtung des Spannungsverlaufs ein oder mehrerer Schlitze in mindestens eine der Schichten eingebracht.

Im folgenden wird die Erfindung anhand von Ausführungsbeispielen und Zeichnungen näher erläutert. Es zeigen :

Fig. 1A: Draufsicht auf eine erfindungsgemäße keramische Platte

Fig. 1B: Querschnitt der keramischen Platte (Schnitt 1B-1B) gemäß der Fig. 1A

Fig. 2: Perspektivische Seitenansicht eines erfindungsgemäßen keramischen Rohrs

Fig. 3: Perspektivische Seitenansicht einer alternativen Ausführung eines erfindungsgemäßen keramischen Rohrs mit Kennzeichnung der Schlitzanordnung bezogen auf den Temperaturverlauf

Fig. 4: Erfindungsgemäßes keramisches Rohr mit einem trichterförmig aufgeweiteten Ende

Fig. 5: Perspektivische Seitenansicht einer alternativen Ausführung einer erfindungsgemäßen keramischen Platte mit Kennzeichnung der Schlitzanordnung bezogen auf den Temperaturverlauf

Fig. 6: Querschnitt einer alternativen Ausführung einer erfindungsgemäßen keramischen Platte, wobei die Schlitze nur durch einige der außenliegenden Schichten des Formteils verlaufen.

Die Zeichnungen zeigen unterschiedliche Ausführungsformen von keramischen Formteilen, die erfindungsgemäß mit Schlitzen versehen sind. Die keramischen Formteile bestehen vorzugsweise aus im wesentlichen reinem $Al_2O_3$, d. h. mit einer Reinheit von 99,6 %. Die eingebrachten Schlitze verhindern die Bildung von Rißen durch Wärmespannungen aufgrund von Temperaturschwankungen in der Einsatzumgebung. Die Schlitze erlauben eine Ausdehnung des Formteils bei erhöhten Temperaturen, d. h. bei Einsatz des Formteils in Hochtemperaturaggregaten, wie z. B. Öfen oder Brennern. Die Schlitze verlaufen in Richtung veränderlicher Wärmedehnung des Formteils, wobei die Schlitzbreite so bemessen ist, daß die maximal auftretende Wärmedehnung durch die Schlitzbreite aufgefangen werden kann. Dies bedeutet, daß die Schlitzbreite Raum für die Dehnung des Formteils zur Verfügung stellt, das andernfalls reißen oder zerbrechen würde.

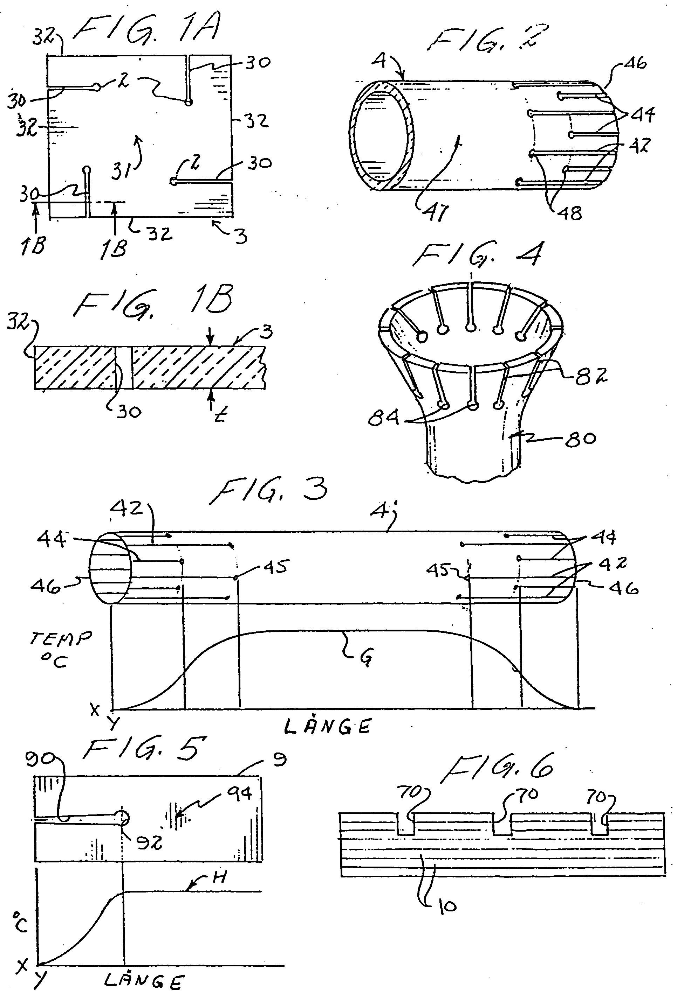

Figur 1A und 1B zeigen eine rechteckig geformte keramische Platte 3 für einen Einsatzzweck, bei dem das Zentrum 31 der Platte 3 einer örtlichen Temperaturbelastung unterliegt. In diesem Fall weist die Platte eine maximale Dehnung im Zentrum auf, die zu den kühleren Rändern 32 hin abnimmt. In die Platte 3 wurden mehrere Schlitze 30 eingebracht, die von jedem der vier Ränder 32 zum Zentrum 31 hin verlaufen, in dem die Temperatur höher ist. Die Schlitze wirken wie bereits im Vorhinein gebildete Rißse, die bei ungleichmäßiger Wärmedehnung einer ungeschlitzten Platte auftreten würden. Jeder Schlitz endet in einer Bohrung 2, die als Verödungsbohrung eine Fortschreitung der Rißse verhindert. In dieser Ausführungsform verlaufen die Schlitze 30 durch die gesamte Dicke t der Platte 3 (von der oberen zur unteren Oberfläche).

Figur 2 zeigt ein hohles keramisches Rohr 4 mit einer zylindrischen Form, das mehrere Längsschlitze 42, 44 aufweist, die von einem Ende 46 des Rohrs ausgehen und in den Bohrungen 48 zum mittleren Teil 47 des Rohrs 4 hin enden. Die Schlitze 42, 44 sind in einem wechselnden Muster angeordnet, wobei die Schlitze 42 weiter in das Rohr 4 hineinreichen als die Schlitze 44. Auf diese Weise wird eine ausreichende Stabilität des geschlitzten Bereiches bei maximaler Entlastungswirkung gewährleistet. Die Schlitze 42, 44 verlaufen durch die gesmte Dicke des Rohrs von der äußeren Oberfläche zur inneren Oberfläche. In Fig. 2 befindet sich die höchste Temperatur am rechten Ende des Rohrs.

Figur 3 zeigt eine alternative Ausführungsform eines erfindungsgemäßen keramischen Rohrs 4', das an beiden Enden 46 mehrere abwechselnd lange und kurze Schlitze 42, 44 mit Bohrungen 48 aufweist. Ebenfalls dargestellt ist der einem typischen Belastungsfall entsprechende Temperaturverlauf G über der Rohrlänge. Die Temperatur steigt von den Rohrenden 46 zum mittleren Bereich hin an und verläuft dann annähernd konstant. Die Schlitze 42, 44 erstrecken sich über die Bereiche des Rohrs 4', in denen ein steiler Temperaturgradient vorliegt. In den Bereichen mit im wesentlichen konstant hohen Temperaturen weist das Rohr 4' keine Schlitze auf.

Figur 4 zeigt ein keramisches Rohr 80 mit einer trichterförmig aufgeweiteten Stirnseite, wobei der Durchmesser des Rohrs 80 zunehmend vom unteren Ende her ansteigt. Die Schlitze 82 gehen von den Bohrungen 84 aus und enden am oberen Rand 80 des Rohrs. Die Schlitze 82 können durch die gesamte Dicke des keramischen Rohrs 80 von der äußeren zur inneren Oberfläche hin verlaufen.

Figur 5 zeigt eine alternative Ausführungsform einer keramischen Platte 9, die einen Schlitz 90 aufweist, der zum Zentrum 94 der Platte hin stetig breiter wird. Aus der dargestellten Temperaturbelastung in diesem Anwendungsfall ist ersichtlich, daß die Temperatur von dem mit dem Schlitz versehenen Rand der Platte 9 zur Plattenmitte hin stetig ansteigt.

Die Breite des Schlitzes 90 nimmt in Richtung der Zone mit höherer Temperatur zu und erreicht an der Bohrung 92 den größten Wert. Der Schlitz 90 erstreckt sich über den Bereich der Platte 9 mit steilem Temperaturgradienten und reicht nicht in den Bereich mit konstanter Temperatur hinein.

In der Ausführungsform entsprechend Fig. 5 verändert sich die Schlitzbreite bevorzugt über die Länge des Formteils, wobei die Schlitzbreite in Richtung steigender Temperatur zunimmt. Auch die Schlitze in den Formteilen der Fig. 1A, 1B, 2, 3, und 4 können in dieser Weise ausgebildet werden. In einer bevorzugten Ausführungsform beträgt die Schlitzbreite nicht mehr als max. 0,5 mm, vorzugsweise zwischen 0,1 mm bis 0,3 mm. Die Bohrungen weisen in bevorzugter Ausführungsform einen Durchmesser auf, der größer ist als die Schlitzbreite. Vorzugsweise beträgt der Bohrungsdurchmesser das fünf- bis zehnfache der mittleren Schlitzbreite.

Die gesamte Schlitzbreite, d. h. die Summe der Breiten aller Schlitze, in einem erfindungsgemäßen Formteil wird so gewählt, daß sie in etwa dem Ausmaß der Wärmedehnung des Formteils entspricht. Dies kann unter Verwendung des Wärmeausdehnungskoeffizienten des keramischen Werkstoffs abgeschätzt bzw. berechnet werden.

Bei den bisher genannten Ausführungsformen entsprechend den Fig. 1 - 5 verlaufen die Schlitze durch die gesamte Dicke des Formteils von der äußeren bzw. oberen Oberfläche bis zur inneren bzw. unteren Oberfläche, wie z. B. in Fig. 1B dargestellt. In Anwendungsfällen, bei denen das Formteil aus keramischem Werkstoff absolut dicht sein soll oder durchgehende Schlitze die mechanische Stabilität des Formteils zu stark herabsetzen würden, werden nur eine oder mehrere, aber nicht alle, der außenliegenden Schichten geschlitzt. Dies wird beispielhaft in Fig. 6 gezeigt. Das im Querschnitt dargestellte Formteil, z.B. eine Platte, ist aus mehreren Schichten 10 aufgebaut. Dabei verlaufen die Schlitze 70 nur durch einige der Schichten 10 des Formteils.

Mit der vorliegenden Erfindung wird eine Rißbildung und Zerstörung von keramischen Formteilen bei ungleichmäßiger Temperaturbelastung wirkungsvoll verhindert, da die erfindungsgemäßen Schlitze unterschiedliche Wärmedehnungen in den Formteilen ausgleichen. Es hat sich gezeigt, daß das erfindungsgemäße Formteil aus keramischem Werkstoff temperaturschockunempfindlich ist, so daß selbst Temperaturunterschiede von 1 000 $^\circ$C auf 5 cm Länge nicht zur Rißbildung oder Ausfall des Formteils führen.

Die Arten der gezeigten Formteile und die Anzahl der Schlitze in diesen Formteilen sind nicht als einschränkende Beispiele zu verstehen. Zur Erreichung des erfindungsgemäßen Zieles können naturgemäß auch andere Formteile bzw. Formteile mit anderer Größe, Form und Struktur verwendet werden. Desweiteren kann auch eine andere Anzahl und/oder Anordnung der Schlitze gewählt werden. Die optimale Schlitzbreite für ein vorgegebenes Formteil kann, wie bereits erwähnt, unter Verwendung des Wärmeausdehnungskoeffizienten des keramischen Werkstoffes errechnet werden. Der Wärmeausdehnungskoeffizient für einen vorgegebenen keramischen Werkstoff oder eine vorgegebene keramische Zusammensetzung kann unter Anwendung von Verfahren, die dem Fachmann geläufig sind, bestimmt werden. Bei den erfindungsgemäßen Formteilen wird eine Ausführungsform mit einer größeren Anzahl von Schlitzen geringer Breite bevorzugt gegenüber einer Ausführungsform mit einer geringen Anzahl von Schlitzen größerer Breite.

Die erfindungsgemäßen keramischen Formteile werden vorzugsweise durch die folgenden Verfahrenschritte hergestellt:

- Auftragen von mindestens fünf Schichten eines keramischen Werkstoffes durch Plasmaspritzen auf einen Formkern oder eine Formplatte;
- Bestimmung der Wärmespannung mit Dehnungsmeßstreifen während der Abkühlung an dem Formkern oder der Formplatte;
- Trennen des keramischen Werkstoffs von dem Formkern oder der Formplatte und Einarbeitung mehrerer Schlitze in mindestens eine Schicht des Formteils in Richtung veränderlicher Wärmespannung, d. h. entlang der Achse der Wärmedehnung.

Die Einarbeitung der Schlitze in das Formteil kann entweder durch mechanische Bearbeitung oder mittels eines Laserschneidgerätes erfolgen.

Die erfindungsgemäßen keramischen Formteile können unter anderem verwendet werden zur Herstellung von Rohren, wie z. B. Flammrohren für Brenner oder Tauchrohren für Gießöfen und Tiegel, oder auch zur Herstellung von Stangen, Platten sowie Durchführungen für Öfen und andere Hochtemperaturaggregate.

**Patentansprüche**

1. Keramisches Formteil, das aus mindestens einer Schicht eines keramischen Werkstoffes aufgebaut ist und das gegen Rißbildung durch Wärmespannungen aufgrund steiler Temperaturgradienten beständig ist, dadurch gekennzeichnet, daß das Formteil mindestens einen Schlitz aufweist, der in Richtung veränderlicher Wärmedehnung verläuft und eine vorgegebene Breite aufweist, wobei die Summe der Schlitzbreiten im wesentlichen der maximalen Wärmedehnung entspricht und die maximal auftretende Wärmedehnung durch die gesamte Schlitzbreite aufgefangen wird.

2. Keramisches Formteil nach Anspruch 1, dadurch gekennzeichnet, daß der Schlitz eine über die Länge veränderliche Schlitzbreite aufweist, wobei die Breite in Richtung zunehmender Temperaturbelastung bis auf einen Wert von maximal 0,5 mm ansteigt.

3. Keramisches Formteil nach einem der vorhergehenden Ansprüche, dadurch gekennzeichnet, daß die Schlitzbreite 0,1 mm bis 0,3 mm beträgt.

4. Keramisches Formteil nach einem der vorhergehenden Ansprüche, dadurch gekennzeichnet, daß in mindestens einer der außenliegenden Schichten des Formteils ein oder mehrere Schlitze eingebracht sind.

5. Keramisches Formteil nach einem der vorhergehenden Ansprüche, dadurch gekennzeichnet, daß der Schlitz mit einer Bohrung versehen ist, deren Durchmesser größer ist als die Schlitzbreite.

6. Keramisches Formteil nach Anspruch 5, dadurch gekennzeichnet, daß der Durchmesser der Bohrung das fünf- bis zehnfache der mittleren Schlitzbreite beträgt.

7. Verfahren zur Herstellung eines keramischen Formteils aus einem keramischen Werkstoff mit schichtartigem Aufbau, das bei ungleichmäßiger Temperaturbeaufschlagung ein unregelmäßiges Wärmeausdehnungsverhalten zeigt, dadurch gekennzeichnet, daß der keramische Werkstoff in mindestens fünf Schichten durch Plasmaspritzen auf einen Formkern oder eine Formplatte aufgetragen wird, daß während der Abkühlung an dem Formkern oder der Formplatte mittels Dehnungsmeßstreifen der Spannungsverlauf festgestellt und nach Trennung des keramischen Werkstoffs vom Formkern bzw. der Formplatte in mindestens eine Schicht mindestens ein Schlitz in Richtung des Spannungsverlaufs eingebracht wird.

8. Verfahren nach Anspruch 7, dadurch gekennzeichnet, daß der Schlitz durch mechanische Bearbeitung eingebracht wird.

9. Verfahren nach Anspruch 7, dadurch gekennzeichnet, daß der Schlitz mittels Lasertechnik eingebracht wird.

10. Verwendung eines keramischen Formteils aus keramischem Werkstoff mit einem - über den Querschnitt gesehen - schichtartigen Aufbau, der bei ungleichmäßiger Temperaturbeaufschlagung ein unregelmäßiges Wärmeausdehnungsverhalten zeigt, wobei das keramisches Formteil mindestens einen Schlitz aufweist, der in Richtung abnehmender Wärmedehnung verläuft und dessen Breite so bemessen ist, daß die maximal auftretende Wärmedehnung in der Schlitzbreite aufgefangen wird, zur Herstellung von Rohren, z.B. Flammrohren für Brenner oder Tauchrohren für Gießöfen, Tiegeln, Stangen, Platten und Durchführungen für Öfen oder andere Hochtemperaturaggregate.

11. Verwendung eines keramischen Formteils in Hochtemperaturumgebungen mit örtlichen Temperaturgradienten, wobei das keramische Formteil aus mindestens einer Schicht eines keramischen Werkstoffes besteht, die mindestens einen Schlitz aufweist, und wobei der Schlitz in einem Bereich des Formteils angeordnet ist, in dem ein Temperaturwechsel stattfindet, um Wärmedehnungen des Formteils aufzufangen.

12. Verwendung nach Anspruch 11, wobei die Schlitzbreite in Richtung der Formteilbereiche mit höherer Temperatur stetig ansteigt.

13. Verwendung nach einem der Ansprüche 11 und 12, wobei am Ende des Schlitzes eine Bohrung angebracht ist.

14. Verwendung nach Anspruch 13, wobei die Schlitzbreite 0,1 mm bis 0,3 mm beträgt und der Durchmesser der Bohrung größer ist als die Schlitzbreite.

15. Verwendung nach einem der Ansprüche 11 bis 14, wobei der Schlitz durch die gesamte Dicke des Formteils verläuft.

16. Verwendung nach einem der Ansprüch 11 bis 14, wobei der Schlitz nur durch einen Teil der Dicke des Formteils verläuft.

FIG. 1A

FIG. 2

FIG. 1B

FIG. 4

FIG. 3

FIG. 5

FIG. 6